# EUROPEAN PATENT APPLICATION

(11) **EP 1 097 778 A2**
(43) Date of publication of application: **09.05.2001**
(21) Application number: 00122004.5
(22) Date of filing: 10.10.2000
(51) Int. Cl.: B23K 26/00, B23K 10/00

(54) **Method for manufacturing objects of metallic material and objects manufactured with this method**

(30) Priority: 20.10.1999 SE 9903780
(71) Applicant: DUROC AB, 901 30 Umea (SE)
(72) Inventor: Olofsson, Lennart, 903 46 Umea (SE)
(74) Representative: Wagner, Karl Heinz

(57) **Abstract**

The present invention relates to a method for manufacturing objects of metallic material and including a base material (2), an intermediate layer (8) and an outer layer (15) formed by surface treatment of the intermediate layer (8). In said method the base material (2) is surface treated with a laser treatment process (Y1) for generating the intermediate layer (8) thereon, whereby the metallic material (4) in the intermediate layer (8) is selected to have such properties that said layer (8) can be surface treated with a second surface treatment process (Y2) different from the laser treatment process (Y1), whereby the intermediate layer (8) is surface treated with said second surface treatment process (Y2) for generating or forming the outer layer (15) thereon.

## Description

The present invention relates to a method for manufacturing objects of metallic material and including a base material, an intermediate layer and an outer layer formed by surface treatment of the intermediate layer. The invention also relates to objects manufactured with said method.

From US-A-4 212 900 it is already known a method according to which an object of metallic material is operated on with a laser beam for melting a first layer and for adding metallic material to the melt in order to fuse or merge a second layer into the first layer. In connection with this laser treatment it is also stated that the object may have three layers.

The object of the present invention has been to increase the possibilities to various combination properties at the prior art method, and this is arrived at by providing the initially defined method with essentially the characterizing measures of subsequent claim 1.

Since the base material is surface treated with a laser treatment process and the intermediate layer with a totally different surface treatment process, objects can be produced through which different metal alloys can provide different combination properties, e.g. properties such as low weight and a low price combined with very qualified surface treatments which today can be carried through only on homogeneous alloys of metallic substances which often are particularly adapted for such surface treatments.

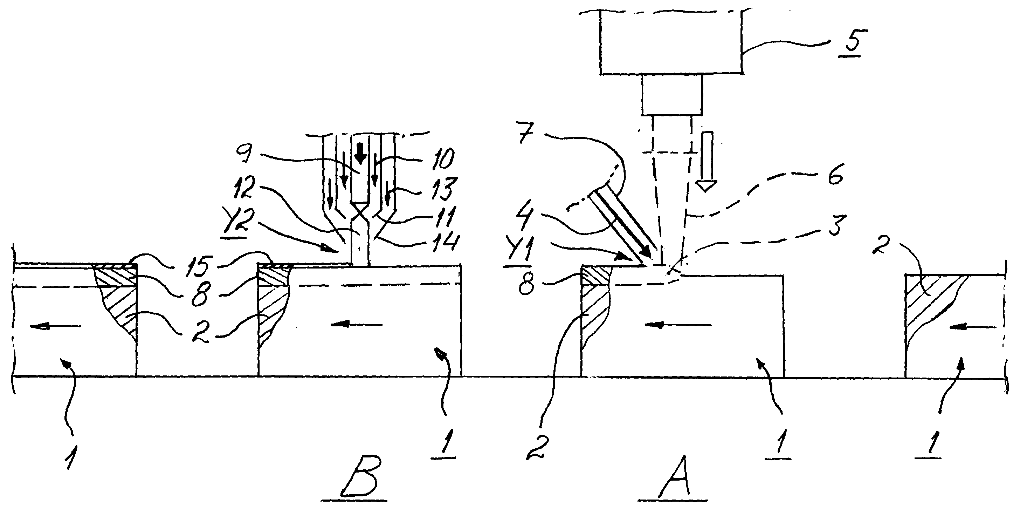

The invention will be further described below with reference to the accompanying drawing which schematically illustrates different surface treatments of an object according to the method of the invention.

The object 1 schematically illustrated on the drawing includes a base material 2 of metal, e.g. a ferro alloy with a carbon content below 0,4 % by weight or a nickel alloy, zinc alloy, aluminium alloy or magnesium alloy or any other suitable metal alloy the properties of which are adapted to the intended use of the object 1. The object 1 is initially subjected to a first surface treatment Y1 which in this example includes formation of a melt 3 to which a metallic material 4 with certain properties is added, namely, inter alia, such properties that said material can be surface treated with a second surface treatment Y2 different from said first surface treatment Y1. In order to carry through the first surface treatment Y1, the object is located e.g. on a first treating station A under a laser unit 5 of a type known per se. This laser unit 5 emits at least one high-energy laser beam 6 towards the object 1 such that the base material 2 thereof is brought to melt, and a metallic material 4 is added to the melt 3 through a conduit 7 or similar. An intermediate layer 8 is formed by this surface treatment Y1 and the metallic material 4 for this formation is chosen for permitting, in a subsequent operation, surface treatment of the intermediate layer 8 with a second surface treatment Y2 different from the first surface treatment Y1, namely e.g. a plasma welding. The metallic material 4 may consist of or as an additive include e.g. austenitic or ferritic steel, cobalt alloys, nickel alloys or said materials with additives of alloying materials, e.g. MMC-alloying materials, or particles giving hard phases such as nitrides, carbides, borides or aluminides. Ferro material included in the intermediate layer 8 may contain at least 0,2 % by weight of nickel, chromium, titanium, vanadium, molybdenum, tantalum, niobium or tungsten. The intermediate layer may also consist of or include cobalt or nickel alloys.

When this first surface treatment Y1 of the base material 2 is finished, i.e. the intermediate layer 8 is completed, the object 1 is moved to another treating station B for the second surface treatment Y2. At this station B e.g. plasma welding is utilized, whereby a tungsten electrode 9 and a plasma gas 10, usually argon, are used, said gas 10 being brought to flow down along said tungsten electrode 9 and, immediately in front of the electrode tip, forced to pass through a small hole in a nozzle 11 together with the electric arc 12. A protective gas 13, usually the same as the plasma gas, flows from an outer nozzle 14 for protecting the melted and warm metal in the intermediate layer 8 from detrimental effects of the surrounding air.

With this second surface treatment Y2 of the intermediate layer 8, an outer layer 15 is provided thereon, giving the object 1 important properties which can not be obtained e.g. by surface treatment of the base material 2.

This thickness of the intermediate layer 8 may lie within a range of 0,2 - 10 mm and it may in certain applications be surface treated for obtaining a flat and smooth surface prior to carrying through the second surface treatment Y2 for formation of the outer layer 15.

The surface treatment Y2 of the intermediate layer 8 for forming the outer layer 15 may be hardening, e.g. case-hardening, flame hardening or induction hardening. The surface treatment may also be nitration, e.g. plasma nitration, ion nitration, CVD-nitration or PVD-nitration. The surface treatment may consist of nitro carburizing, chemical gas deposition (CVD), physical gas deposition (PVD), coating or surfacing with a DLC- (Diamond Like Carbon) layer or titanium nitride layer, thermal spraying, hard chromium plating, chemical nickel layer coating or another suitable surface treatment. The surface treatment Y2 may also occur by deposition of layers of or containing titanium carbide, titanium nitride, niobium carbide, tantalum carbide, molybdenum, disulphide or silver.

The intermediate layer 8 preferably includes up to 3 % by weight of carbon.

The thickness of the intermediate layer 8 and the outer layer 15 is preferably selected such that the Hertzian pressure which is applied onto the object 1 when said object is subjected to the maximum permissible load, is carried by the part of the object 1 defined by the base material 2. Thereby, it is prevented or at least opposed that the intermediate layer 8 ruptures or cracks or loosens from said part of the object 1 when said object 1 is subjected to said maximum load.

The selection of the thickness of the outer layer for taking up the Hertzian pressure at inner portions of objects manufactured in other ways than the present object, is described in the publication PCT/SE94/00920 (WO 95/09736) and in the corresponding EP-application 94 929 709.7.

By one of said above selections of material, the base material 2 can be brought to provide certain properties, e.g. a low price and/or a low weight (e.g. by using aluminium) and/or electric conducting and/or heat resisting and/or heat conducting properties.

The intermediate layer 8 can be brought to provide properties not provided by the base material 2, e.g. the property to form said outer layer 15 thereon. The outer layer 15 can in turn be brought to provide other properties than the base material 2 and/or the intermediate layer 8, e.g. low friction properties and/or corrosion resisting properties.

Examples of objects 1 to be manufactured are cam shafts, slide bearings or ball valves having a low weight while e.g. the base material is or includes aluminium, and having outer low-friction properties while the outer layer 15 provides it.

The base material 2, intermediate layer 8 and outer layer 15 can be selected to consist of or include such metallic material that they together define objects 1, e.g. press tools, cutting or shearing tools or railway wheels with other properties than the properties provided by conventional base material after surface treatment, e.g. such other properties as a high deformation resistance combined with a high crack-formation resistance in outer portions of the object.

The base material 2 may also consist of cheap bulk material, while the intermediate layer 8 is formed from a metallic material permitting surface treatment Y2 to an outer layer 15 substantially more durable than the bulk material. This intermediate layer 8 is provided with the substantially more durable or resistant outer layer 15 for e.g. manufacturing electric contactors, engine valves or gear wheels.

Thus, the object 1 may include such base material 2 which can not be provided with an outer layer 15 by a certain surface treatment Y2 and/or with certain properties. This can be remedied by providing the base material 2 with the intermediate layer 8 which in turn consists of metallic material 4 which permits surface treatment Y2 for forming or providing said outer layer 15.

With the abovementioned methods it is possible to manufacture very different types of metallic objects 1 with combined properties, e.g. objects such as cam shafts, slide bearings, ball valves, press tools, railway wheels, electric connectors, valves or gear wheels.

The method according to the invention is not limited to the examples stated above, but may vary within the scope of the subsequent claims. Thus, the second surface treatment Y2 of the intermediate layer 8 may be of other types than the abovementioned. Also, appropriate surface treatments Y1 and Y2 may be carried through at the same station instead of moving the object 1.

When using high energy in the form of laser energy, more than one laser beam can be used, and it should finally be noted that it is also possible to form or provide more than two layers on the base material 2.

## Claims

1. Method for manufacturing objects of metallic material and including a base material (2), an intermediate layer (8) and an outer layer (15) formed by surface treatment of the intermediate layer (8),
**characterized by**
surface treating the base material (2) with a laser treatment process (Y1) for forming the intermediate layer (8) thereon, during which laser treatment process (Y1) the base material (2) is heated with high energy such that it transforms into a melt (3),
adding metallic material (4) to the melt (3) such that said metallic material (4) forms an intermediate layer (8) which has fused together with the base material (2),
selecting the metallic material (4) in the intermediate layer (8) to show such properties that said intermediate layer (8) can be surface treated with another surface treatment process (Y2) than laser treatment, and
surface treating the intermediate layer (8) with said other surface treatment process (Y2) for forming the outer layer (15) thereon.

2. Method according to claim 1, **characterized by** adding metallic material (4) to the melt (3) for alloying the base material (2).

3. Method according to claim 1, **characterized by** adding metallic material (4) to the melt (3) for impregnating the base material (2).

4. Method according to any of the preceding claims, **characterized by** surface treating (Y1) the base material (2) by welding metallic material (4) thereon by means of laser radiation to form or provide the intermediate layer (8).

5. Method according to any preceding claim, **characterized by** surface treating (Y2) the intermediate layer (8) by hardening to form or provide the outer layer (15).

6. Method according to claim 5, **characterized by** surface treating (Y2) the intermediate layer (8) by case-hardening, flame hardening or induction hardening to form the outer layer (15).

7. Method according to any preceding claim, **characterized by** surface treating (Y2) the intermediate layer (8) by chemical gas deposition (CVD).

8. Method according to any of claims 1-6, **characterized by** surface treating (Y2) the intermediate layer (8) by physical gas deposition (PVD).

9. Method according to any of claims 1-4, **characterized by** surface treating (Y2) the intermediate layer (8) by nitration for forming or providing the outer layer (15).

10. Method according to claim 9, **characterized by** surface treating (Y2) the intermediate layer (8) by plasma nitration, ion nitration, deposition of nitrides through chemical gas deposition (CVD-nitration) or deposition of nitrides through physical gas deposition (PVD-nitration).

11. Method according to any of claims 1-4, **characterized by** surface treating (Y2) the intermediate layer (8) by nitro carburizing for forming or providing the outer layer (15).

12. Method according to any of claims 1-4, **characterized by** surface treating (Y2) the intermediate layer (8) by coating or surfacing with a DLC- (Diamond Like Carbon) layer or a layer containing titanium nitride, niobium carbide, tantalum carbide, molybdenum disulphide or silver to form the outer layer (15).

13. Method according to any of claims 1-4, **characterized by** surface treating (Y2) the intermediate layer (8) by subjecting it to thermal spraying for forming the outer layer (15).

14. Method according to any of claims 1-4, **characterized by** surface treating (Y2) the intermediate layer (8) by hard chromium plating thereof to form the outer layer (15).

15. Method according to any of claims 1-4, **characterized by** surface treating (Y2) the intermediate layer (8) by applying a chemical nickel layer thereon to form or provide the outer layer (15).

16. Method according to any preceding claim, **characterized in** that the intermediate layer (8) includes maximum 3 % by weight of carbon.

17. Method according to any preceding claim, **characterized in** that the base material (2) consists of or includes a ferro alloy with maximum 8 % by weight of carbon.

18. Method according to claim 17, **characterized in** that the ferro alloy has a carbon content of less than 0,4 % by weight.

19. Method according to any of claims 1-16, **characterized in** that the base material (2) consists of or includes an aluminium alloy.

20. Method according to any of claims 1-16, **characterized in** that the base material (2) consists of or includes a nickel alloy.

21. Method according to any of claims 1-16, **characterized in** that the base material (2) consists of or includes a zink alloy.

22. Method according to any of claims 1-16, **characterized in** that the base material (2) consists of or includes a magnesium alloy.

23. Method according to any preceding claim, **characterized in** that the Intermediate layer (8) consists of or includes additives of austenitic steel materials.

24. Method according to any of claims 1-22, **characterized in** that the intermediate layer (8) consists of or includes additives of ferritic steel materials.

25. Method according to any of claims 1-22, **characterized in** that the intermediate layer (8) consists of or includes additives of cobalt alloys.

26. Method according to any of claims 1-22, **characterized in** that the intermediate layer (8) consists of or includes additives of nickel alloys.

27. Method according to any of claims 1-22, **characterized in** that the intermediate layer (8) consists of or includes additives of austenitic steel materials, ferritic steel materials, cobalt alloys or nickel alloys and said materials with additives of alloying materials and/or particles giving hard phases such as nitrides, carbides, borides or aluminides.

28. Method according to any of claims 1-22, **characterized in** that the intermediate layer (8) consists of or includes additives of ferro alloys containing at least 0,2 % by weight of nickel, chromium, titanium, vanadium, molybdenum, tantalum, niobium or tungsten.

29. Method according to any of claims 1-22, **characterized in** that the intermediate layer (8) consists of or includes cobalt alloys.

30. Method according to any of claims 1-22, **characterized in** that the intermediate layer (8) consists of or includes nickel alloys.

31. Method according to any preceding claim, **characterized by** selecting the thickness of the intermediate layer (8) and the outer layer (15) such that the Hertzian pressure which is applied onto the object (1) when said object (1) is subjected to the maximum permissible load, is carried substantially by the part of the object (1) defined by the base material (2), whereby it is prevented or opposed that the intermediate layer (8) ruptures or cracks or loosens from said part of the object (1) when said object is subjected to said maximum load.

32. Method according to any preceding claim, **characterized by** selecting the thickness of the intermediate layer (8) to lie within a range of 0,2 - 10 mm.

33. Method according to any preceding claim, **characterized by** treating or processing the surface of the intermediate layer (8) for obtaining a flat and smooth surface thereon prior to carrying through surface treatment (Y2) thereof for formation of the outer layer (15).

34. Method according to any preceding claim, **characterized by** forming the base material (2) from metallic material (4) having certain properties, e.g. a low price and/or a low weight and/or electric conducting and/or heat conducting properties, providing said base material (2) with an intermediate layer (8) having properties not provided by the base material (2), e.g. ability to be surface treated for forming the outer layer (15) thereon, and surface treating (Y2) said intermediate layer (8) such that it forms or provides an outer layer (15) having other properties than the base material (2) as well as the intermediate layer (8), e.g. low friction and/or corrosion resisting properties.

35. Method according to any preceding claim, **characterized by** forming the base material (2) from a low weight metallic material (4), e.g. aluminium, and providing low friction properties to the outer layer (15) for providing an object (1) having a low weight and external low friction properties, e.g. cam shafts, slide bearings or ball valves.

36. Method according to any of claims 1-34, **characterized by** selecting the base material (2), intermediate layer (8) and outer layer (15) to consist of or include such metallic material (4) that they together define or form an object (1), e.g. a press tool cutting or shearing tool or railway wheel, with other properties than those provided by conventional base material after surface treatment, e.g. such other properties as a high deformation resistance combined with a high crack-formation resistance in outer portions of the object (1).

37. Method according to any of claims 1-34, **characterized by** forming the base material (2) from cheap bulk material, forming the intermediate layer (8) from a metallic material (4) permitting surface treatment (Y2) into an outer layer (15) which is substantially more durable than the bulk material and providing the intermediate layer (8) with the substantially more durable outer layer (15) in order to manufacture electric contactors, engine valves or gear wheels.

38. Method according to any preceding claim, wherein the base material (2) of the object (1) is such that it can not be provided with an outer layer by a certain surface treatment thereof and/or with certain properties, **characterized by** providing the base material (2) with an intermediate layer (8) which in turn consists of or includes such metallic material (4) that it permits surface treatment (Y2) for forming or providing said outer layer (15).

39. Object, manufactured by the method according to any of claims 1-38, **characterized in** that the objects (1) are cam shafts, slide bearings, ball valves, press tools, cutting or shearing tools, railway wheels, electric connectors, engine valves or gear wheels.
